# FASCICULE DE BREVET EUROPEEN

(11) **EP 3 284 209 B1**
(45) Date de publication et mention de la délivrance du brevet: **05.06.2019**
(21) Numéro de dépôt: 16733130.5
(22) Date de dépôt: 14.04.2016
(51) Int. Cl.: H04L 9/32, G06F 17/30

(54) **PROCÉDÉS DE GÉNÉRATION ET DE VÉRIFICATION D'UNE CLÉ DE SÉCURITÉ D'UNE UNITÉ MONÉTAIRE VIRTUELLE**
VERFAHREN ZUR ERZEUGUNG UND VERIFIZIERUNG EINES SICHERHEITSSCHLÜSSELS EINER VIRTUELLEN GELDEINHEIT
METHODS OF GENERATING AND VERIFYING A SECURITY KEY OF A VIRTUAL MONETARY UNIT

(30) Priorité: 14.04.2015 FR 1553267
(43) Date de publication de la demande: 21.02.2018
(73) Titulaire: My Pharma Company, 78000 Versailles (FR)
(72) Inventeur: BEAUCHENE, Fabrice, 78320 Le Mesnil Saint Denis (FR); PILET, Nicolas, 28500 Tréon (FR)
(74) Mandataire: Regimbeau
(86) Numéro de dépôt international: PCT/FR2016/050861
(87) Numéro de publication internationale: WO 2016/166478

(56) Documents cités:
- EP-A2- 1 594 252
- CA-A1- 2 838 406
- US-A1- 2009 254 386
- US-A1- 2015 023 581
- US-A1- 2015 051 995

## Description

### DOMAINE TECHNIQUE GENERAL

La présente invention concerne le domaine de la sécurité des transactions.

Plus précisément, elle concerne des procédés de génération et de vérification d'une clé de sécurité d'une unité monétaire virtuelle

### ETAT DE L'ART

Le « crowdfunding » (en français financement participatif) est un mode de financement d'un projet via des méthodes de transactions financières faisant appel à un grand nombre de personnes.

Ce mode de financement se fait sans l'aide des acteurs traditionnels du financement tel que les banques, il est dit désintermédié. L'émergence d'Internet a permis l'apparition de plateformes dédiées utilisant des technologies dédiées pour gérer de façon sure et automatisée les transactions financières liées à un projet.

En particulier, il est connu de verser en ligne une certaine somme d'argent de sorte à acquérir une « part » d'un projet. Les méthodes de chiffrement actuelles permettent de garantir l'intégrité et l'unicité de chaque versement d'argent, notamment par l'achat d'une unité monétaire virtuelle associée à une clé privée.

Toutefois, on constate que les plateformes actuelles s'avèrent limitées. En particulier, dans la mesure où un projet peut être associé à plusieurs dizaines de milliers d'unités monétaires virtuelles, il n'apparait pas possible au vu des puissances de calcul typique des serveurs utilisés pour la mise en oeuvre de ces plateformes de dépasser quelques centaines de projets. A ce niveau de charge, la plateforme n'est plus capable de vérifier chacune des millions de transactions qui peuvent alors lieu en peu de temps, et des failles de sécurité peuvent apparaître (création de « fausse monnaie », c'est-à-dire d'unités monétaires frauduleuses, vol d'argent des souscripteurs, etc.)

Le document CA 2838406 A1 propose un système de dons pour des projets de charité.

Il serait souhaitable de disposer d'une nouvelle solution de gestion d'unités monétaires virtuelles qui ne présente plus les limitations connues, y compris en cas de très grand nombre de projet, et maintienne un niveau de sécurité absolu.

### PRESENTATION DE L'INVENTION

La présente invention se rapporte ainsi selon un premier aspect à un procédé de génération d'une clé de sécurité d'une unité monétaire virtuelle d'un projet acquise par un utilisateur d'un équipement client connecté par un réseau à une plateforme comprenant des moyens de stockage de données stockant une base de données d'unités monétaires virtuelles chacune au moins associée à:
- un identifiant unique de l'unité monétaire,
- un identifiant unique du projet de ladite unité monétaire virtuelle, et
- un identifiant unique dudit utilisateur ayant acquis ladite unité monétaire virtuelle ;
le procédé étant caractérisé en ce qu'il comprend la mise en oeuvre par des moyens de traitement de données de la plateforme d'étapes de :
(a) Génération d'une première partie de clé de sécurité représentative du projet, ladite première partie de clé comprenant une première empreinte cryptographique d'au moins l'identifiant unique dudit projet, et une pluralité de caractères aléatoires insérés à des positions prédéterminées dans ladite première empreinte ;
(b) Génération d'une deuxième partie de clé de sécurité représentative de l'unité monétaire, ladite deuxième partie de clé comprenant une deuxième empreinte cryptographique d'au moins l'identifiant de l'unité monétaire virtuelle et l'identifiant de l'utilisateur ;
(c) Transmission audit équipement d'un message comprenant les première et deuxième parties de la clé de sécurité.

Selon d'autres caractéristiques avantageuses et non limitatives :
- lesdites positions prédéterminées des caractères aléatoires sont à intervalles réguliers ;
- chaque empreinte cryptographique est une chaîne de caractères, la première partie de clé étant constituée de ladite première empreinte et des caractères aléatoires, la deuxième partie de clé étant uniquement constituée de ladite deuxième empreinte ;
- chaque empreinte cryptographique est une chaîne de quarante caractères, la première partie de clé comprenant huit caractères aléatoires ;
- lesdites empreintes cryptographiques sont obtenues par application d'une fonction de hachage ;
- chaque unité monétaire virtuelle est également associée dans ladite base de données à un code du projet de ladite unité monétaire virtuelle, la première empreinte cryptographique étant une empreinte cryptographique d'une concaténation de l'identifiant et du code dudit projet ;
- chaque unité monétaire virtuelle est également associée dans ladite base de données à un marqueur temporel de l'acquisition de ladite unité monétaire virtuelle, la deuxième empreinte cryptographique étant une empreinte cryptographique d'une concaténation de l'identifiant dudit projet, de l'identifiant de ladite unité monétaire virtuelle, de l'identifiant de l'utilisateur, et du marqueur temporel de l'acquisition de ladite unité monétaire virtuelle.

Selon un deuxième aspect, l'invention concerne un procédé de vérification d'une clé de sécurité d'une unité monétaire virtuelle d'un projet acquise par un utilisateur d'un équipement client connecté par un réseau à une plateforme comprenant des moyens de stockage de données stockant une base de données d'unités monétaires virtuelles chacune au moins associée à :
- un identifiant unique de l'unité monétaire,
- un identifiant unique du projet de ladite unité monétaire virtuelle, et
- un identifiant unique dudit utilisateur ayant acquis ladite unité monétaire virtuelle ;
le procédé étant caractérisé en ce qu'il comprend la mise en oeuvre par des moyens de traitement de données de la plateforme d'étapes de :
(a) Pour chaque projet auquel au moins une unité monétaire virtuelle est associée dans ladite base de données, génération d'une première empreinte cryptographique d'au moins l'identifiant unique dudit projet ;
(b) Comparaison de ladite première empreinte générée pour chaque projet avec une première partie de ladite clé de sécurité dans laquelle des caractères à des positions prédéterminés ont été enlevés, de sorte à identifier le projet de l'unité monétaire virtuelle de ladite clé ;
(c) Pour chaque unité monétaire virtuelle associée dans ladite base de données audit projet identifié, génération d'une deuxième empreinte cryptographique d'au moins l'identifiant de l'unité monétaire virtuelle et l'identifiant de l'utilisateur ;
(d) Comparaison de ladite deuxième empreinte générée pour chaque unité monétaire virtuelle associée dans ladite base de données audit projet identifié avec une deuxième partie de ladite clé de sécurité, de sorte à identifier l'unité monétaire virtuelle de ladite clé.

Selon un troisième aspect, l'invention concerne une plateforme comprenant des moyens de stockage de données stockant une base de données d'unités monétaires virtuelles chacune au moins associée à :
- un identifiant unique de l'unité monétaire,
- un identifiant unique d'un projet de ladite unité monétaire virtuelle, et
- un identifiant unique d'un utilisateur ayant acquis ladite unité monétaire virtuelle ;
la plateforme comprenant en outre des moyens de traitement de données configurés pour générer une clé de sécurité d'une unité monétaire virtuelle d'un projet acquise par un utilisateur d'un équipement client connecté par un réseau à la plateforme, en mettant en oeuvre :
- un module de génération d'une première partie de clé de sécurité représentative du projet, ladite première partie de clé comprenant une première empreinte cryptographique d'au moins l'identifiant unique dudit projet, et une pluralité de caractères aléatoires insérés à des positions prédéterminées dans ladite première empreinte ;
- un module de génération d'une deuxième partie de clé de sécurité représentative de l'unité monétaire, ladite deuxième partie de clé comprenant une deuxième empreinte cryptographique d'au moins l'identifiant de l'unité monétaire virtuelle et l'identifiant de l'utilisateur ;
- Un module de transmission audit équipement d'un message comprenant les première et deuxième parties de la clé de sécurité.

Selon un quatrième aspect, l'invention concerne une plateforme comprenant des moyens de stockage de données stockant une base de données d'unités monétaires virtuelles chacune au moins associée à :
- un identifiant unique de l'unité monétaire,
- un identifiant unique d'un projet de ladite unité monétaire virtuelle, et
- un identifiant unique d'un utilisateur ayant acquis ladite unité monétaire virtuelle ;
la plateforme comprenant en outre des moyens de traitement de données configurés pour vérifier une clé de sécurité d'une unité monétaire virtuelle d'un projet acquise par un utilisateur d'un équipement client connecté par un réseau à une plateforme, en mettant en oeuvre :
- Un module de génération, pour chaque projet auquel au moins une unité monétaire virtuelle est associée dans ladite base de données, d'une première empreinte cryptographique d'au moins l'identifiant unique dudit projet ;
- Un module de comparaison de ladite première empreinte générée pour chaque projet avec une première partie de ladite clé de sécurité dans laquelle des caractères à des positions prédéterminés ont été enlevés, de sorte à identifier le projet de l'unité monétaire virtuelle de ladite clé ;
- Un module de génération, pour chaque unité monétaire virtuelle associée dans ladite base de données audit projet identifié, d'une deuxième empreinte cryptographique d'au moins l'identifiant de l'unité monétaire virtuelle et l'identifiant de l'utilisateur ;
- Un module de comparaison de ladite deuxième empreinte générée pour chaque unité monétaire virtuelle associée dans ladite base de données audit projet identifié avec une deuxième partie de ladite clé de sécurité, de sorte à identifier l'unité monétaire virtuelle de ladite clé.

Selon un cinquième aspect, l'invention concerne un produit programme d'ordinateur comprenant des instructions de code pour l'exécution d'un procédé selon le premier aspect de génération d'une clé de sécurité d'une unité monétaire virtuelle ou d'un procédé selon le deuxième aspect de vérification d'une clé de sécurité d'une unité monétaire virtuelle, lorsque ledit programme est exécuté par un ordinateur.

Selon un sixième aspect, l'invention concerne un moyen de stockage lisible par un équipement informatique sur lequel un produit programme d'ordinateur comprend des instructions de code pour l'exécution d'un procédé selon le premier aspect de génération d'une clé de sécurité d'une unité monétaire virtuelle ou d'un procédé selon le deuxième aspect de vérification d'une clé de sécurité d'une unité monétaire virtuelle.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

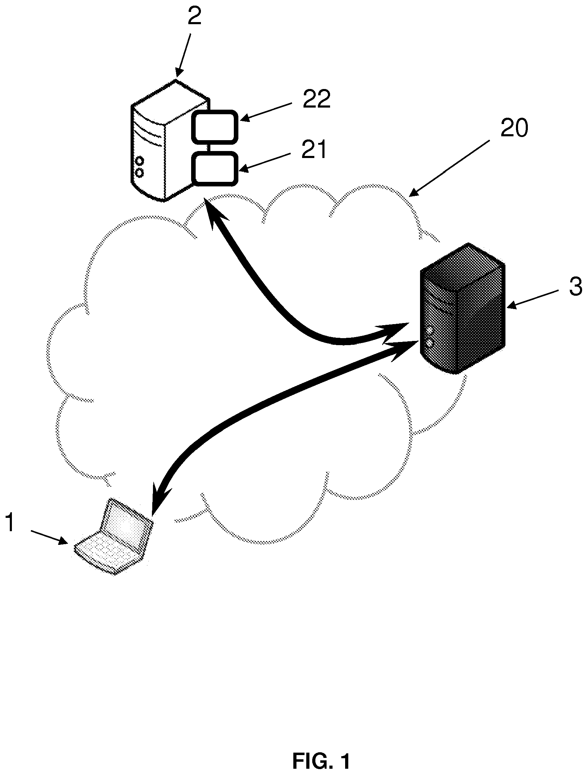

- la figure 1 est un schéma d'une architecture générale de réseau pour la mise en oeuvre des procédés selon l'invention.

### DESCRIPTION DETAILLEE

### Architecture

En référence à la **figure 1**, l'invention propose deux procédés complémentaires, dont un procédé de génération d'une clé de sécurité d'une unité monétaire virtuelle d'un projet acquise par un utilisateur d'un équipement client 1, et une procédé de vérification d'une clé de sécurité d'une unité monétaire virtuelle d'un projet acquise par un utilisateur d'un équipement client 1.

Dans le premier le cas, il s'agit, connaissant l'identité d'un utilisateur ayant acquis une unité monétaire virtuelle, de générer une clé secrète qui lui sera transmise pour preuve ultérieure de la possession de l'unité virtuelle.

Dans le deuxième cas, il s'agit, connaissant une clé de sécurité fournie par un utilisateur, de vérifier l'authenticité de cette clé et ainsi la bonne possession de l'unité monétaire virtuelle associée par l'utilisateur la revendiquant.

L'équipement client 1 peut être n'importe quel poste de travail ou terminal (par exemple de type smartphone) connecté par un réseau 20 (typiquement internet) à une plateforme 2 (la plateforme de sécurité du financement participatif).

La plateforme 2 est typiquement un serveur comprenant des moyens de traitement de données 21 (par exemple un processeur) et des moyens de stockage de données 22 une mémoire, par exemple un disque dur).

Lesdits moyens 22 stockent une base de données d'unités monétaires virtuelles qui sera décrite plus loin.

On note que le réseau peut comprendre un autre serveur 3, préférentiellement distinct de la plateforme 2, pour la mise à disposition des utilisateurs des informations sur les différents projets participatifs possibles. Il est ainsi possible d'isoler la plateforme 2 pour la dédier aux procédures de sécurités liées aux clés. Par exemple, la procédure d'achat/vente d'une unité monétaire virtuelle (via des modules bancaires) sera par exemple dévolue au serveur 3, la plateforme 2 étant sollicitée dès qu'une transaction est complétée pour générer/vérifier la clé de sécurité (ou les clés si la transaction concerne plusieurs unités).

Dans l'exemple représenté par la figure 1, la plateforme 2 est connectée aux équipements 1 via le serveur 3 qui agit comme pare-feu.

### Unité monétaires virtuelles

Lesdites unités monétaires virtuelles désignent une part dans un projet. Chacune est unique, et spécifique du projet. Plus particulièrement, elles sont désignées en tant que « points de R&D » si ledit projet est un projet de recherche. On note que la nature des unités n'a ici aucune importance, seules les procédures de sécurité impliquées constituant la présente invention.

De façon générale, lorsque l'opérateur de la plateforme 2 et le cas échéant valide un projet, il génère dans ladite base de données des moyens 22 un nombre prédéterminé d'unités monétaires virtuelles associées au projet, qui sont proposées à la vente auprès des utilisateurs qui peuvent via leurs équipements 1 réaliser des transactions en utilisant des techniques connues.

Chaque unité est alors au moins associée dans la base de données à :
- un identifiant unique de l'unité monétaire (par exemple un nombre unique généré aléatoirement ou séquentiellement à la génération de l'unité),
- un identifiant unique du projet de ladite unité monétaire virtuelle (par exemple un nombre unique généré aléatoirement ou séquentiellement à la validation du projet), et
- un identifiant unique dudit utilisateur ayant acquis ladite unité monétaire virtuelle (par exemple un nombre unique généré aléatoirement ou séquentiellement à la première connexion/inscription de l'utilisateur à la plateforme 2 et/ou au serveur 3).

Chaque unité monétaire virtuelle peut également associée dans ladite base de données à un code du projet de ladite unité monétaire virtuelle (une chaine de caractère secrète également générée à la validation du projet), et/ou à un marqueur temporel de l'acquisition de ladite unité monétaire virtuelle (par exemple un nombre de la forme AAAA-MM-JJ heures:minutes:secondes désignant la date et l'heure de l'acquisition), et/ou un marqueur temporel de la création de ladite unité monétaire virtuelle (du même format).

On note que chaque attribut est manipulé en tant que chaîne de caractères (même si c'est un nombre).

Par exemple une unité virtuelle monétaire peut être associée aux attributs :
- ID du projet = '100'
- Code du projet = 'MOTDEPASSE'
- ID du point de R&D = '27999'
- ID de l'acquéreur = '1456'
- Date transaction = '20150101103049' (ceci correspond au marqueur temporel du 2015-01-01 10:30:49)
- Date création = '20150101000002' (ceci correspond au marqueur temporel du 2015-01-01 00:00:02)

Outre ces attributs, la base de données peut stocker des informations plus génériques et plus indéfinies telles que des informations sur l'utilisateur acquéreur (coordonnées, adresse, etc.), et des informations sur la transaction (montant, banque, etc.).

### Procédé de génération de la clé

Selon un premier aspect est proposé le procédé de génération de la clé de sécurité d'une unité monétaire virtuelle (qui vient d'être acquise). Ce procédé, ainsi que le procédé de vérification qui sera décrit plus loin, se distinguent en ce que la clé est en deux parties. Comme l'on verra, cela permet de réduire très fortement le temps nécessaire pour vérifier une clé tout en garantissant un niveau de sécurité maximal.

Dans le cadre du procédé de génération, ladite unité est clairement identifiée et ses attributs sont connus par la plateforme 2. Le procédé commence par une étape (a) de génération par les moyens de traitement de données 21 de la plateforme 2 d'une première partie de clé de sécurité représentative du projet.

Plus précisément, ladite première partie de clé comprend une première empreinte cryptographique d'au moins l'identifiant unique dudit projet, et une pluralité de caractères aléatoires insérés à des positions prédéterminées dans ladite première empreinte.

Cette première partie correspond en effet à l'identification du projet, une seule première partie de clé étant généré même si plusieurs unités sont achetées simultanément sur le projet par un utilisateur.

Ladite empreinte cryptographique est ce que l'on appelle un « hash », elle est obtenue par application d'une fonction de hachage sur une chaine de caractère, en particulier la fonction SHA-1. Une fonction de hachage est une fonction « à sens unique » qui génère une chaine de caractère pseudo-aléatoire unique (ici quarante caractères) associée à une entrée donnée. Partant de l'empreinte il n'est par contre pas possible de retrouver l'entrée. La seule solution est d'appliquer la même fonction de hachage à de nombreuses entrées possibles jusqu'à trouver celle dont l'empreinte correspond.

Ici ladite première empreinte est au moins une empreinte de l'identifiant unique dudit projet, et avantageusement une empreinte d'une concaténation de l'identifiant et du code dudit projet.

Pour reprendre l'exemple précédant, la première empreinte cryptographique est donnée par sha1('100MOTDEPASSE').

Afin de ne pas fournir une même clé aux investisseurs par projet, les caractères aléatoires sont insérés (avantageusement huit caractères). De façon préférée, la première partie de clé est (seulement) constituée de ladite première empreinte et des caractères aléatoires.

Lesdites positions prédéterminées des caractères aléatoires sont avantageusement à intervalles réguliers, par exemple un caractère aléatoire tous les cinq caractères de la première empreinte (soit huit pout quarante), de sorte à obtenir quelque chose de la forme 'AxxxxxAxxxxxAxxxxxAxxxxxAxxxxxAxxxxxAxxxxxAxxxxx'.

Dans une deuxième étape (b), les moyens de traitement de données 21 de la plateforme 2 génèrent une deuxième partie de clé de sécurité cette fois représentative de l'unité monétaire.

Plus précisément, ladite deuxième partie de clé comprend une deuxième empreinte cryptographique d'au moins l'identifiant de l'unité monétaire virtuelle et l'identifiant de l'utilisateur. Cette fois la deuxième partie de clé est de façon préférée uniquement constituée de ladite deuxième empreinte (pas de caractères aléatoires, de sorte à avoir unicité de la deuxième empreinte).

La deuxième empreinte est le cas échéant obtenue par la même fonction de hachage, par exemple SHA-1, de sorte à être une chaîne de quarante caractères.

La deuxième empreinte cryptographique peut être une empreinte cryptographique d'une concaténation de tout ou partie de l'identifiant dudit projet (optionnel), de l'identifiant de ladite unité monétaire virtuelle, de l'identifiant de l'utilisateur, et du marqueur temporel de l'acquisition de ladite unité monétaire virtuelle (optionnel). D'autres attributs peuvent être impliqués. L'ordre n'a pas d'importance.

Pour reprendre l'exemple précédant, la deuxième empreinte cryptographique est donnée par sha1('10027999145620150101103049').

Dans une dernière étape (c), est transmis audit équipement 1 (via le réseau 20) d'un message (par exemple un document PDF) comprenant les première et deuxième parties de la clé de sécurité. On note que les deux parties peuvent être concaténées en une chaîne (dans notre exemple de 88 caractères) pour que l'utilisateur ne voie qu'une clé de sécurité sans signification et ne distingue pas les deux parties.

Si l'utilisateur a acheté plusieurs (n) unités monétaires virtuelles du même projet, il reçoit autant de clés que d'unités achetées (soit n clés). Comme expliqué, la première partie est commune à toutes donc soit il reçoit dans le message la première partie et les n deuxième parties séparément, soit il reçoit n clés constituées de la première partie concaténée à chacune des n deuxièmes parties.

Cette (ou ces) clé est le seul élément fourni à l'utilisateur acquéreur (qui doit la garder secrète) et n'est pas stocké dans la base de données de la plateforme 2. Les attributs d'une unité monétaire dans la base de données ne sont jamais transmis et restent secrets.

### Procédé de vérification de la clé

Selon un deuxième aspect est proposé le procédé de vérification d'une clé de sécurité d'une unité monétaire virtuelle (que le possesseur souhaite par exemple vendre).

Dans le cadre du procédé de vérification, ladite unité n'est pas identifiée puisque la clé seule est illisible et que l'utilisateur ne connait aucun des attributs de l'unité à laquelle elle correspond (hormis sont identifiant d'utilisateur acquéreur). L'objectif du procédé de vérification est de vérifier que la clé est valide est désigné bien une unité monétaire virtuelle possédée par cet utilisateur, et d'identifier de laquelle il s'agit dans la base de données de la plateforme 2.

Préalablement à la mise en oeuvre du procédé, l'équipement 1 peut afficher une interface permettant de saisir une clé de sécurité, soit en un bloc, soit séparément les deux parties si elles ont été communiquées ainsi à l'utilisateur, pour transmission à la plateforme 2. Dans le premier cas (en bloc) les moyens 11 ou les moyens 21 scindent la clé en deux parties (séparation à quarante-cinq caractères dans notre exemple).

Le procédé de vérification commence par une étape (a) de génération par les moyens de traitement de données 21 de la plateforme 2 d'une première partie de clé de sécurité représentative du projet, pour chaque projet auquel au moins une unité monétaire virtuelle est associée dans ladite base de données, d'une première empreinte cryptographique d'au moins l'identifiant unique dudit projet.

Ainsi on génère toutes les premières empreintes possibles (de la même façon que dans le procédé de génération) en parcourant les projets avec les données secrètes d'identifiant de projet et/ou de code de projet.

Dans une deuxième étape (b), la première empreinte générée pour chaque projet est comparée avec une première partie de ladite clé de sécurité dans laquelle des caractères à des positions prédéterminés ont été enlevés (les caractères aléatoires), de sorte à identifier le projet de l'unité monétaire virtuelle de ladite clé.

En d'autres termes, chacune de ces empreintes générées est comparée à la première partie de la clé saisie à laquelle sont enlevés les différents caractères aléatoires qui avaient été ajoutés (de sorte à retrouver l'unicité de la première empreinte). S'il y a une correspondance, c'est que la première partie de la clé est valide, et l'on sait désormais à quel projet faire référence, ce qui permet de réduire considérablement le temps de recherche pour vérifier le reste de la clé. Cela évite de devoir mettre en oeuvre un trop grand nombre de hachages (obtentions d'empreintes). Ainsi, s'il y a *i* projets de *j* clés, le présent procédé n'a besoin que de générer *i*+*j* empreintes, au lieu de *i***j.*

Ainsi, dans la troisième étape (c), pour chaque unité monétaire virtuelle associée dans ladite base de données audit projet identifié (et non pour chaque unité monétaire virtuelle), les moyens de traitement 21 génèrent une deuxième empreinte cryptographique d'au moins l'identifiant de l'unité monétaire virtuelle et l'identifiant de l'utilisateur (de la même façon que dans le procédé de génération, le cas échéant en concaténant tout ou partie de l'identifiant dudit projet (optionnel), de l'identifiant de ladite unité monétaire virtuelle, de l'identifiant de l'utilisateur, et du marqueur temporel de l'acquisition de ladite unité monétaire virtuelle (optionnel)).

Enfin, dans l'étape (d) sont comparés ladite deuxième empreinte générée pour chaque unité monétaire virtuelle associée dans ladite base de données audit projet identifié avec une deuxième partie de ladite clé de sécurité, de sorte à identifier l'unité monétaire virtuelle de ladite clé.

En d'autres termes, la plateforme 2 parcourt l'ensemble des unités monétaires virtuelle associés à ce projet et régénère une à une les deuxièmes empreintes que l'on compare à chaque fois à la deuxième partie de clé de sécurité précédemment saisie dans l'interface. Si on trouve une correspondance c'est que la deuxième partie de clé est valide.

Si les deux parties de clés sont valides c'est que la clé de sécurité est valide. L'identifiant d'unité monétaire virtuelle utilisé pour générer la deuxième empreinte concordante est donc celui de l'unité réellement possédée par l'utilisateur.

On note qu'on peut d'une part comparer l'identifiant d'utilisateur associé dans la base de données avec celui fourni par l'utilisateur ayant réalisé la saisie de façon à vérifier qu'il n'a pas volé la clé de sécurité.

On peut ensuite ainsi afficher les différentes informations sur ce point :
- Informations sur l'utilisateur
- Informations sur la transaction

### Plateforme et produit programme d'ordinateur

Selon un autre aspect, l'invention concerne la plateforme 2 pour la mise en oeuvre du procédé de génération d'une clé de sécurité et/ou du procédé de vérification d'une clé de sécurité (avantageusement des deux)

Dans tous les cas, comme expliqué la plateforme 2 comprend des moyens de stockage de données 22 stockant une base de données d'unités monétaires virtuelles chacune au moins associée à :
- un identifiant unique de l'unité monétaire,
- un identifiant unique d'un projet de ladite unité monétaire virtuelle, et
- un identifiant unique d'un utilisateur ayant acquis ladite unité monétaire virtuelle ;
la plateforme comprenant en outre des moyens de traitement de données 21 configurés :
- dans le premier cas pour générer une clé de sécurité d'une unité monétaire virtuelle d'un projet acquise par un utilisateur d'un équipement client 1 connecté par un réseau 20 à la plateforme 2, en mettant en oeuvre :
   o un module de génération d'une première partie de clé de sécurité représentative du projet, ladite première partie de clé comprenant une première empreinte cryptographique d'au moins l'identifiant unique dudit projet, et une pluralité de caractères aléatoires insérés à des positions prédéterminées dans ladite première empreinte ;
   o un module de génération d'une deuxième partie de clé de sécurité représentative de l'unité monétaire, ladite deuxième partie de clé comprenant une deuxième empreinte cryptographique d'au moins l'identifiant de l'unité monétaire virtuelle et l'identifiant de l'utilisateur ;
   o Un module de transmission audit équipement 1 d'un message comprenant les première et deuxième parties de la clé de sécurité.
- Dans le deuxième cas pour vérifier une clé de sécurité d'une unité monétaire virtuelle d'un projet acquise par un utilisateur d'un équipement client 1 connecté par un réseau 20 à une plateforme 2, en mettant en oeuvre :
   o Un module de génération, pour chaque projet auquel au moins une unité monétaire virtuelle est associée dans ladite base de données, d'une première empreinte cryptographique d'au moins l'identifiant unique dudit projet ;
   o Un module de comparaison de ladite première empreinte générée pour chaque projet avec une première partie de ladite clé de sécurité dans laquelle des caractères à des positions prédéterminés ont été enlevés, de sorte à identifier le projet de l'unité monétaire virtuelle de ladite clé ;
   o Un module de génération, pour chaque unité monétaire virtuelle associée dans ladite base de données audit projet identifié, d'une deuxième empreinte cryptographique d'au moins l'identifiant de l'unité monétaire virtuelle et l'identifiant de l'utilisateur ;
- Un module de comparaison de ladite deuxième empreinte générée pour chaque unité monétaire virtuelle associée dans ladite base de données audit projet identifié avec une deuxième partie de ladite clé de sécurité, de sorte à identifier l'unité monétaire virtuelle de ladite clé.

L'invention concerne en outre un produit programme d'ordinateur comprenant des instructions de code pour l'exécution (en particulier sur les moyens de traitement de données 21 de la plateforme 2) des procédés de génération d'une clé de sécurité d'une unité monétaire virtuelle de vérification d'une clé de sécurité d'une unité monétaire virtuelle ; ainsi que le moyen de stockage (en particulier les moyens de stockage de données 22 de la plateforme 2) lisible par un équipement informatique sur lequel on trouve ce produit programme d'ordinateur.

## Revendications

1. Procédé de génération d'une clé de sécurité d'une unité monétaire virtuelle d'un projet acquise par un utilisateur d'un équipement client (1) connecté par un réseau (20) à une plateforme (2) comprenant des moyens de stockage de données (22) stockant une base de données d'unités monétaires virtuelles chacune au moins associée à :
- un identifiant unique de l'unité monétaire,
- un identifiant unique du projet de ladite unité monétaire virtuelle, et
- un identifiant unique dudit utilisateur ayant acquis ladite unité monétaire virtuelle ;
le procédé étant **caractérisé en ce qu'**il comprend la mise en oeuvre par des moyens de traitement de données (21) de la plateforme (2) d'étapes de :
(a) Génération d'une première partie de clé de sécurité représentative du projet, ladite première partie de clé comprenant une première empreinte cryptographique d'au moins l'identifiant unique dudit projet, et une pluralité de caractères aléatoires insérés à des positions prédéterminées dans ladite première empreinte ;
(b) Génération d'une deuxième partie de clé de sécurité représentative de l'unité monétaire, ladite deuxième partie de clé comprenant une deuxième empreinte cryptographique d'au moins l'identifiant de l'unité monétaire virtuelle et l'identifiant de l'utilisateur ;
(c) Transmission audit équipement (1) d'un message comprenant les première et deuxième parties de la clé de sécurité.

2. Procédé selon la revendication 1, dans lequel lesdites positions prédéterminées des caractères aléatoires sont à intervalles réguliers.

3. Procédé selon l'une des revendications 1 et 2, dans laquelle chaque empreinte cryptographique est une chaîne de caractères, la première partie de clé étant constituée de ladite première empreinte et des caractères aléatoires, la deuxième partie de clé étant uniquement constituée de ladite deuxième empreinte.

4. Procédé selon la revendication 3, dans lequel chaque empreinte cryptographique est une chaîne de quarante caractères, la première partie de clé comprenant huit caractères aléatoires.

5. Procédé selon l'une des revendications 1 à 4, dans lequel lesdites empreintes cryptographiques sont obtenues par application d'une fonction de hachage.

6. Procédé selon l'une des revendications 1 à 5, dans lequel chaque unité monétaire virtuelle est également associée dans ladite base de données à un code du projet de ladite unité monétaire virtuelle, la première empreinte cryptographique étant une empreinte cryptographique d'une concaténation de l'identifiant et du code dudit projet.

7. Procédé selon l'une des revendications 1 à 6, dans lequel chaque unité monétaire virtuelle est également associée dans ladite base de données à un marqueur temporel de l'acquisition de ladite unité monétaire virtuelle, la deuxième empreinte cryptographique étant une empreinte cryptographique d'une concaténation de l'identifiant dudit projet, de l'identifiant de ladite unité monétaire virtuelle, de l'identifiant de l'utilisateur, et du marqueur temporel de l'acquisition de ladite unité monétaire virtuelle.

8. Procédé de vérification d'une clé de sécurité d'une unité monétaire virtuelle d'un projet acquise par un utilisateur d'un équipement client (1) connecté par un réseau (20) à une plateforme (2) comprenant des moyens de stockage de données (22) stockant une base de données d'unités monétaires virtuelles chacune au moins associée à :
- un identifiant unique de l'unité monétaire,
- un identifiant unique du projet de ladite unité monétaire virtuelle, et
- un identifiant unique dudit utilisateur ayant acquis ladite unité monétaire virtuelle ;
le procédé étant **caractérisé en ce qu'**il comprend la mise en oeuvre par des moyens de traitement de données (21) de la plateforme (2) d'étapes de :
(a) Pour chaque projet auquel au moins une unité monétaire virtuelle est associée dans ladite base de données, génération d'une première empreinte cryptographique d'au moins l'identifiant unique dudit projet ;
(b) Comparaison de ladite première empreinte générée pour chaque projet avec une première partie de ladite clé de sécurité dans laquelle des caractères à des positions prédéterminés ont été enlevés, de sorte à identifier le projet de l'unité monétaire virtuelle de ladite clé ;
(c) Pour chaque unité monétaire virtuelle associée dans ladite base de données audit projet identifié, génération d'une deuxième empreinte cryptographique d'au moins l'identifiant de l'unité monétaire virtuelle et l'identifiant de l'utilisateur ;
(d) Comparaison de ladite deuxième empreinte générée pour chaque unité monétaire virtuelle associée dans ladite base de données audit projet identifié avec une deuxième partie de ladite clé de sécurité, de sorte à identifier l'unité monétaire virtuelle de ladite clé.

9. Plateforme (2) comprenant des moyens de stockage de données (22) stockant une base de données d'unités monétaires virtuelles chacune au moins associée à :
- un identifiant unique de l'unité monétaire,
- un identifiant unique d'un projet de ladite unité monétaire virtuelle, et
- un identifiant unique d'un utilisateur ayant acquis ladite unité monétaire virtuelle ;
la plateforme comprenant en outre des moyens de traitement de données (21) configurés pour générer une clé de sécurité d'une unité monétaire virtuelle d'un projet acquise par un utilisateur d'un équipement client (1) connecté par un réseau (20) à la plateforme (2), en mettant en oeuvre :
- un module de génération d'une première partie de clé de sécurité représentative du projet, ladite première partie de clé comprenant une première empreinte cryptographique d'au moins l'identifiant unique dudit projet, et une pluralité de caractères aléatoires insérés à des positions prédéterminées dans ladite première empreinte ;
- un module de génération d'une deuxième partie de clé de sécurité représentative de l'unité monétaire, ladite deuxième partie de clé comprenant une deuxième empreinte cryptographique d'au moins l'identifiant de l'unité monétaire virtuelle et l'identifiant de l'utilisateur ;
- Un module de transmission audit équipement (1) d'un message comprenant les première et deuxième parties de la clé de sécurité.

10. Plateforme (2) comprenant des moyens de stockage de données (22) stockant une base de données d'unités monétaires virtuelles chacune au moins associée à :
- un identifiant unique de l'unité monétaire,
- un identifiant unique d'un projet de ladite unité monétaire virtuelle, et
- un identifiant unique d'un utilisateur ayant acquis ladite unité monétaire virtuelle ;
la plateforme comprenant en outre des moyens de traitement de données (21) configurés pour vérifier une clé de sécurité d'une unité monétaire virtuelle d'un projet acquise par un utilisateur d'un équipement client (1) connecté par un réseau (20) à une plateforme (2), en mettant en oeuvre :
- Un module de génération, pour chaque projet auquel au moins une unité monétaire virtuelle est associée dans ladite base de données, d'une première empreinte cryptographique d'au moins l'identifiant unique dudit projet ;
- Un module de comparaison de ladite première empreinte générée pour chaque projet avec une première partie de ladite clé de sécurité dans laquelle des caractères à des positions prédéterminés ont été enlevés, de sorte à identifier le projet de l'unité monétaire virtuelle de ladite clé ;
- Un module de génération, pour chaque unité monétaire virtuelle associée dans ladite base de données audit projet identifié, d'une deuxième empreinte cryptographique d'au moins l'identifiant de l'unité monétaire virtuelle et l'identifiant de l'utilisateur ;
- Un module de comparaison de ladite deuxième empreinte générée pour chaque unité monétaire virtuelle associée dans ladite base de données audit projet identifié avec une deuxième partie de ladite clé de sécurité, de sorte à identifier l'unité monétaire virtuelle de ladite clé.

11. Produit programme d'ordinateur comprenant des instructions de code pour l'exécution d'un procédé selon l'une des revendications 1 à 7 de génération d'une clé de sécurité d'une unité monétaire virtuelle ou d'un procédé selon la revendication 8 de vérification d'une clé de sécurité d'une unité monétaire virtuelle, lorsque ledit programme est exécuté par un ordinateur.

12. Moyen de stockage lisible par un équipement informatique sur lequel un produit programme d'ordinateur comprend des instructions de code pour l'exécution d'un procédé selon l'une des revendications 1 à 7 de génération d'une clé de sécurité d'une unité monétaire virtuelle ou d'un procédé selon la revendication 8 de vérification d'une clé de sécurité d'une unité monétaire virtuelle.

## Patentansprüche

1. Verfahren zum Erzeugen eines Sicherheitsschlüssels einer virtuellen Geldeinheit eines Projekts, die von einem Benutzer einer kundeneigenen Ausstattung (1) erworben wird, die durch ein Netzwerk (20) mit einer Plattform (2) verbunden ist, die Datenspeichermittel (22) umfasst, die eine Datenbank virtueller Geldeinheiten speichern, die jeweils mindestens assoziiert sind mit:
- einem eindeutigen Identifikator der Geldeinheit,
- einem eindeutigen Identifikator des Projekts der virtuellen Geldeinheit, und
- einem eindeutigen Identifikator des Benutzers, der die virtuelle Geldeinheit erworben hat;
wobei das Verfahren **dadurch gekennzeichnet ist, dass** es das Umsetzen durch Datenverarbeitungsmittel (21) der Plattform (2) von Schritten umfasst, zum:
(a) Erzeugen eines ersten Sicherheitsschlüsselteils, der für das Projekt repräsentativ ist, wobei der erste Schlüsselteil einen ersten Hashwert mindestens des eindeutigen Identifikators des Projekts umfasst, und eine Vielzahl zufälliger Zeichen, die an vorbestimmten Positionen in dem ersten Hashwert eingefügt sind;
(b) Erzeugen eines zweiten Sicherheitsschlüsselteils, der für die Geldeinheit repräsentativ ist, wobei der zweite Schlüsselteil einen zweiten Hashwert mindestens des Identifikators der virtuellen Geldeinheit und des Identifikators des Benutzers umfasst;
(c) Übertragen zu der Ausstattung (1) einer Meldung, die den ersten und zweiten Teil des Sicherheitsschlüssels umfasst.

2. Verfahren nach Anspruch 1, wobei die vorbestimmten Positionen der zufälligen Zeichen in regelmäßigen Abständen vorliegen.

3. Verfahren nach einem der Ansprüche 1 und 2, wobei jeder Hashwert eine Zeichenkette ist, wobei der erste Schlüsselteil aus dem ersten Hashwert und den zufälligen Zeichen besteht, wobei der zweite Schlüsselteil nur aus dem zweiten Hashwert besteht.

4. Verfahren nach Anspruch 3, wobei jeder Hashwert eine Kette aus vierzig Zeichen ist, wobei der erste Schlüsselteil acht zufällige Zeichen umfasst.

5. Verfahren nach einem der Ansprüche 1 bis 4, wobei die Hashwert durch Anwenden einer Hashfunktion erhalten werden.

6. Verfahren nach einem der Ansprüche 1 bis 5, wobei jede virtuelle Geldeinheit in der Datenbank auch mit einem Code des Projekts der virtuellen Geldeinheit assoziiert ist, wobei der erste Hashwert ein Hashwert einer Konkatenation des Identifikators und des Codes des Projekts ist.

7. Verfahren nach einem der Ansprüche 1 bis 6, wobei jede virtuelle Geldeinheit in der Datenbank auch mit einem zeitweiligen Marker des Erwerbs der virtuellen Geldeinheit assoziiert ist, wobei der zweite Hashwert ein Hashwert einer Konkatenation des Identifikators des Projekts, des Identifikators der virtuellen Geldeinheit, des Identifikators des Benutzers und des zeitweiligen Markers des Erwerbs der virtuellen Geldeinheit ist.

8. Verfahren zum Prüfen eines Sicherheitsschlüssels einer virtuellen Geldeinheit eines Projekts, die von einem Benutzer einer kundeneigenen Ausstattung (1) erworben wird, die durch ein Netzwerk (20) mit einer Plattform (2) verbunden ist, die Datenspeichermittel (22) umfasst, die eine Datenbank virtueller Geldeinheiten speichern, die jeweils mindestens assoziiert sind mit:
- einem eindeutigen Identifikator der virtuellen Geldeinheit,
- einem eindeutigen Identifikator des Projekts der virtuellen Geldeinheit, und
- einem eindeutigen Identifikator des Benutzers, der die virtuelle Geldeinheit erworben hat;
wobei das Verfahren **dadurch gekennzeichnet ist, dass** es das Umsetzen durch Datenverarbeitungsmittel (21) der Plattform (2) von Schritten umfasst, zum:
(a) für jedes Projekt, mit dem mindestens eine virtuelle Geldeinheit in der Datenbank assoziiert ist, Erzeugen eines ersten Hashwert mindestens des eindeutigen Identifikators des Projekts;
(b) Vergleichen des ersten Abdrucks, der für jedes Projekt erzeugt wird, mit einem ersten Teil des Sicherheitsschlüssels, in dem Zeichen an vorbestimmten Positionen entfernt wurden, so dass das Projekt der virtuellen Geldeinheit des Schlüssels identifiziert wird;
(c) für jede virtuelle Geldeinheit, die in der Datenbank mit dem identifizierten Projekt assoziiert ist, Erzeugen eines zweiten Hashwert mindestens des Identifikators der virtuellen Geldeinheit und des Identifikators des Benutzers;
(d) Vergleichen des zweiten Hashwert, der für jede virtuelle Geldeinheit, die in der Datenbank mit dem identifizierten Projekt assoziiert ist, erzeugt wird, mit einem zweiten Teil des Sicherheitsschlüssels, so dass die virtuelle Geldeinheit des Schlüssels identifiziert wird.

9. Plattform (2), die Datenspeichermittel (22) umfasst, die eine Datenbank virtueller Geldeinheiten speichern, die jeweils mindestens assoziiert sind mit:
- einem eindeutigen Identifikator der Geldeinheit,
- einem eindeutigen Identifikator eines Projekts der virtuellen Geldeinheit, und
- einem eindeutigen Identifikator eines Benutzers, der die virtuelle Geldeinheit erworben hat;
wobei die Plattform außerdem Datenverarbeitungsmittel (21) umfasst, die konfiguriert sind, um einen Sicherheitsschlüssel einer virtuellen Geldeinheit eines Projekts zu erzeugen, die von einem Benutzer einer kundenspezifischen Ausstattung (1) erworben wird, die durch ein Netzwerk (20) mit der Plattform (2) verbunden ist, indem Folgendes umgesetzt wird:
- ein Erzeugungsmodul eines ersten Sicherheitsschlüsselteils, der für das Projekt repräsentativ ist, wobei der erste Schlüsselteil einen ersten Hashwert mindestens des eindeutigen Identifikators des Projekts umfasst, und eine Vielzahl zufälliger Zeichen, die an vorbestimmten Positionen in dem ersten Hashwert eingefügt sind;
- ein Erzeugungsmodul eines zweiten Sicherheitsschlüsselteils, der für die Geldeinheit repräsentativ ist, wobei der zweite Schlüsselteil einen zweiten Hashwert mindestens des Identifikators der virtuellen Geldeinheit und des Identifikators des Benutzers umfasst;
- ein Modul zum Übertragen zu der Ausstattung (1) einer Meldung, die den ersten und zweiten Teil des Sicherheitsschlüssels umfasst.

10. Plattform (2), die Datenspeichermittel (22) umfasst, die eine Datenbank virtueller Geldeinheiten umfasst, die jeweils mindestens assoziiert sind mit:
- einem eindeutigen Identifikator der Geldeinheit,
- einem eindeutigen Identifikator eines Projekts der virtuellen Geldeinheit, und
- einem eindeutigen Identifikator eines Benutzers, der die virtuelle Geldeinheit erworben hat;
wobei die Plattform außerdem Datenverarbeitungsmittel (21) umfasst, die konfiguriert sind, um einen Sicherheitsschlüssel einer virtuellen Geldeinheit eines Projekts, die von einem Benutzer einer kundenspezifischen Ausstattung (1), die durch ein Netzwerk (20) mit einer Plattform (2) verbunden ist, erworben wird, zu verifizieren, indem Folgendes umgesetzt wird:
- ein Erzeugungsmodul für jedes Projekt, mit dem mindestens eine virtuelle Geldeinheit in der Datenbank assoziiert ist, eines ersten Hashwert mindestens des eindeutigen Identifikators des Projekts;
- ein Vergleichsmodul des ersten Abdrucks, der für jedes Hashwert erzeugt wird, mit einem ersten Teil des Sicherheitsschlüssels, in dem Zeichen an vorbestimmten Positionen entfernt wurden, so dass das Projekt der virtuellen Geldeinheit des Schlüssels identifiziert wird;
- ein Erzeugungsmodul für jede virtuelle Geldeinheit, die in der Datenbank mit dem identifizierten Projekt assoziiert ist, eines zweiten Hashwert mindestens des Identifikators der virtuellen Geldeinheit und des Identifikators des Benutzers;
- ein Vergleichsmodul des zweiten Hashwert, der für jede virtuelle Geldeinheit, die in der Datenbank mit dem identifizierten Projekt assoziiert ist, erzeugt wird, mit einem zweiten Teil des Sicherheitsschlüssels, so dass die virtuelle Geldeinheit des Schlüssels identifiziert wird.

11. Computerprogrammprodukt, das Codeanweisungen zum Ausführen eines Verfahrens nach einem der Ansprüche 1 bis 7 zum Erzeugen eines Sicherheitsschlüssels einer virtuellen Geldeinheit oder eines Verfahrens nach Anspruch 8 zur Verifizierung eines Sicherheitsschlüssels einer virtuellen Geldeinheit umfasst, wenn das Programm von einem Computer ausgeführt wird.

12. Speichermittel, das durch eine Informatikausstattung lesbar ist, auf der ein Computerprogrammprodukt Codeanweisungen für die Ausführung eines Verfahrens nach einem der Ansprüche 1 bis 7 zum Erzeugen eines Sicherheitsschlüssels einer virtuellen Geldeinheit oder eines Verfahrens nach Anspruch 8 zur Verifizierung eines Sicherheitsschlüssels einer virtuellen Geldeinheit umfasst.

## Claims

1. Method for generating a security key of a virtual monetary unit of a project acquired by a user of a client equipment (1) connected by a network (20) to a platform (2) comprising means for storing data (22) storing a database of virtual monetary units, each at least associated with:
- a unique monetary unit ID,
- a unique ID of the project of said virtual monetary unit, and
- a unique ID of said user having acquired said virtual monetary unit;
the method being **characterised in that** it comprises the implementation by means for processing data (21) of the platform (2), of steps of:
(a) Generating a first security key part representative of the project, said first key part comprising a first hash value of at least the unique ID of said project, and a plurality of random characters inserted in predetermined positions in said hash value;
(b) Generating a second security key part representative of the monetary unit, said second key part comprising a second hash value of at least the ID of the virtual monetary unit and the ID of the user;
(c) Transmitting to said equipment (1), a message comprising the first and second security key parts.

2. Method according to claim 1, wherein said predetermined positions of the random characters are at regular intervals.

3. Method according to one of claims 1 to 2, wherein each hash value is a character string, the first key part being constituted of said first hash value and random characters, the second key part being only constituted of said second hash value.

4. Method according to claim 3, wherein each hash value is a string of forty characters, the first key part comprising eight random characters.

5. Method according to one of claims 1 to 4, wherein said hash values are obtained by applying a hash function.

6. Method according to one of claims 1 to 5, wherein each virtual monetary unit is also associated in said database with a code of the project of said virtual monetary unit, the first hash value being a hash value of a concatenation of the ID and of the code of said project.

7. Method according to one of claims 1 to 6, wherein each virtual monetary unit is also associated in said database with a time marker for acquiring said virtual monetary unit, the second hash value being a hash value of a concatenation of the ID of said project, of the ID of said virtual monetary unit, of the ID of the user, and of the time marker for acquiring said virtual monetary unit.

8. Method for verifying a security key of a virtual monetary unit of a project acquired by a user of a client equipment (1) connected by a network (20) to a platform (2) comprising means for storing data (22) storing a database of virtual monetary units, each at least associated with:
- a unique monetary unit ID,
- a unique ID of the project of said virtual monetary unit, and
- a unique ID of said user having acquired said virtual monetary unit;
the method being **characterised in that** it comprises the implementation by means for processing data (21) of the platform (2) of steps of:
(a) For each project to which at least one virtual monetary unit is associated in said database, generating a first hash value of at least the unique ID of said project;
(b) Comparing said first hash value generated for each project with a first part of said security key wherein characters at predetermined positions have been removed, so as to identify the project of the virtual monetary unit of said key;
(c) For each virtual monetary unit associated in said database with said identified project, generating a second hash value of at least the ID of the virtual monetary unit and the ID of the user;
(d) Comparing said second hash value generated for each virtual monetary unit associated in said database to said project identified with a second part of said security key, so as to identify the virtual monetary unit of said key.

9. Platform (2) comprising means for storing data (22) storing a database of virtual monetary units, each at least associated with:
- a unique monetary unit ID,
- a unique ID of the project of said virtual monetary unit, and
- a unique ID of said user having acquired said virtual monetary unit;
the platform further comprising means for processing data (21) configured to generate a security key of a virtual monetary unit of a project acquired by a user of a client equipment (1) connected by a network (20) to the platform (2), by implementing:
- a module for generating a first security key part representative of the project, said first key part comprising a first hash value of at least the unique ID of said project, and a plurality of random characters inserted at predetermined positions in said first hash value;
- a module for generating a second security key part representative of the monetary unit, said second key part comprising a second hash value of at least the ID of the virtual monetary unit and the ID of the user;
- a module for transmitting to said equipment (1) of a message comprising the first and second security key parts.

10. Platform (2) comprising means for storing data (22) storing a database of virtual monetary units, each at least associated with:
- a unique monetary unit ID,
- a unique ID of the project of said virtual monetary unit, and
- a unique ID of said user having acquired said virtual monetary unit;
the platform further comprising means for processing data (21) configured to verify that a security key of a virtual monetary unit of a project acquired by a user of a client equipment (1) connected by a network (20) to a platform (2), by implementing:
- a module for generating, for each project to which at least one virtual monetary unit is associated in said database, of a first hash value of at least the unique ID of said project;
- a module for comparing said first hash value generated for each project with a first part of said security key wherein characters at predetermined positions have been removed, so as to identify the project of the virtual monetary unit of said key;
- a module for generating, for each virtual monetary unit associated in said database, with said identified project, of a second hash value of at least the ID of the virtual monetary unit and the ID of the user;
- a module for comparing said second hash value generated for each virtual monetary unit associated in said database with said identified project with a second part of said security key, so as to identify the virtual monetary unit of said key.

11. Computer program product comprising code instructions for executing a method according to one of claims 1 to 7 for generating a security key of a virtual monetary unit or of a method according to claim 8 for verifying a security key of a virtual monetary unit, when said program is executed by a computer.

12. Storage means which can be read by an IT equipment on which a computer program product comprises code instructions for executing a method according to one of claims 1 to 7 for generating a security key of a virtual monetary unit or of a method according to claim 8 for verifying a security key of a virtual monetary unit.
